# EUROPEAN PATENT APPLICATION

(11) **EP 1 862 900 A2**
(43) Date of publication of application: **05.12.2007**
(21) Application number: 07003339.4
(22) Date of filing: 16.02.2007
(51) Int. Cl.: G06F 9/44

(54) **Emulation of an interactive electronic form**

(30) Priority: 19.05.2006 US 438099
(71) Applicant: SAP AG, 69190 Walldorf (DE)
(72) Inventor: Dubeau, Guillaume, QCJ7T 2E5 Saint-Lazare (CA); Hamdi, Louenas, QCH1Y 3E3 Verdun (CA); Seiter, Laurent, QCH3N 2A2 Montreal (CA); Spriestersbach, Axel, 76131 Karlsruhe (DE)
(74) Representative: Müller-Boré & Partner Patentanwälte

(57) **Abstract**

In a first general aspect, a method of adapting an interactive electronic form is described. The method includes extracting, from an interactive electronic form, source code that defines at least one function of the interactive electronic form. The interactive electronic form has a format that is supported by a reader application. The method also includes parsing the source code to identify components of the interactive electronic form, generating an executable application using the identified components that when executed provides the at least one function of the interactive electronic form, and forwarding the executable application for execution on a device that does not have the reader application.

## Description

### TECHNICAL FIELD

This specification relates to a system and method for emulation of an interactive electronic form.

### BACKGROUND

Users can use interactive forms to transmit data across network systems. The users can enter information into an interactive form and a reader application that displays the interactive form can format the entered information and e-mail it to an address specified by the form.

For example, a sales representative may access a form used to obtain a current stock quantity for particular product. After the sales representative has entered data, such as a product identifier, relevant dates, etc., the representative may select a submit button on the form that causes the reader application to format the form into an e-mail and transmitted it to a stock department, which maintains the requested information.

Reader applications that use interactive electronic forms may run on desktop computers, laptop computers, and other computing devices with sufficient memory and processing power. The reader used to display and interact with the forms, however, may not function on some devices with limited processing power or memory, such as cellular telephones and e-mailing devices.

### SUMMARY

The present specification relates to emulation of an interactive electronic form.

In a first general aspect, a method of adapting an interactive electronic form is described. The method includes extracting, from an interactive electronic form, source code that defines at least one function of the interactive electronic form. The interactive electronic form has a format that is supported by a reader application. The method also includes parsing the source code to identify components of the interactive electronic form, generating an executable application using the identified components that when executed provides the at least one function of the interactive electronic form, and forwarding the executable application for execution on a device that does not have the reader application.

In certain embodiments, the format supported by the reader application can include Adobe® Portable Document Format. Generating the executable application further can include accessing a code framework that is customized based on the identified components of the interactive electronic form. The code framework can include code to facilitate e-mail transmission of user input entered into the executable application.

In a second general aspect, a method for emulating transmission of interactive electronic form data using a mobile device is described. The method includes receiving at a mobile device an emulator application generated using identified components of an interactive electronic form. The interactive electronic form is displayable by a form reader application configured to format data that is input into the interactive electronic form and transmit the formatted data to a server application. The method also includes executing the emulator application. The execution includes formatting data input into the emulator application in a format substantially similar to a format of the formatted data generated by the form reader application. Additionally, the method includes transmitting the data formatted by the emulator application to the server application.

In certain embodiments, the method can further include validating the data input into the emulator application based on validation requirements specified by at least one of the identified components of the interactive electronic form. The execution can further include receiving information from a local application stored at the mobile device. The received information can include contact information or calendar information.

In a third general aspect, a system for adapting an interactive electronic form is described. The system includes an extractor to extract source code that defines at least one function of an interactive electronic form. The interactive electronic form has a format that is supported by a reader application. The system also includes a parser to identify components of the interactive electronic form, a code generator for generating an executable application using the identified components that when executed provides the at least one function of the interactive electronic form, and an interface for transmitting the executable application to a remote device that lacks the reader application. In certain embodiments, the executable application can be a java program. The parser, the code generator, and the interface can be part of a plug-in of executable code that is accessed by a stand-alone application.

In a fourth general aspect, a computer program product tangibly embodied in an information carrier is described. The computer program product includes instructions that, when executed, perform operations including extracting, from an interactive electronic form, form definitions that specify at least one interaction performed by the form, where the form has a format that is used by a reader application. The operations also include identifying components of the form definitions, generating an executable application using the identified components that when executed performs the at least one interaction, and transmitting the executable application for execution on a device that does not have the reader application.

The systems and techniques described here may provide one or more of the following advantages. First, a system can include an executable program that emulates an interactive electronic form, which can be executed on devices that do not support the form. Second, the executable program can pre-fill information on behalf of a user or present a user interface component for selecting data for input into the program. Third, a system can generate an emulator program that may be executed on various platforms, including mobile devices with limited hardware and software resources. Fourth, a system can generate an emulator program that transmits user input to a server, where the transmitted user input is formatted so that it appears to have been generated by an interactive electronic form.

The details of one or more embodiments are set forth in the accompanying drawings and the description below. Features, aspects, and advantages will be apparent from the description and drawings, and from the claims.

### DESCRIPTION OF DRAWINGS

FIG. 1A is a schematic diagram of an example system for adapting an interactive electronic form for execution on a device that does not have a reader application supporting the form.
FIG. 1B is a schematic diagram of an example system for emulating transmission of interactive electronic form data using a remote device.
FIG. 2 is a block diagram of an example application generator and a remote device.
FIG. 3 is a flow chart showing an example process for adapting an interactive electronic form or other user interface for execution on a remote device.
FIG. 4 is a flow chart showing an example process for emulating transmission of interactive form data using a remote device.
FIG. 5A is an example of source code extracted from an interactive electronic form.
FIG. 5B is a first portion of an example of code generated for a form emulator application.
FIG. 5C is a second portion of an example of code generated for a form emulator application.
FIG. 6A is an example graphical user interface (GUI) of an interactive electronic form.
FIG. 6B is an example GUI of a form emulator application.
FIG. 7 is a schematic diagram of examples of a generic computing device and a generic mobile computing device.

Like reference symbols in the various drawings indicate like elements.

### DETAILED DESCRIPTION

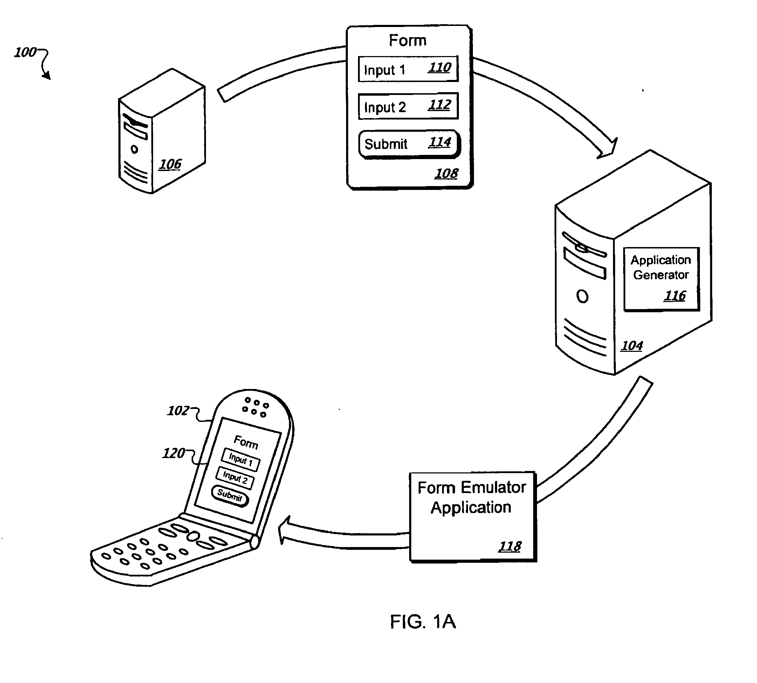

FIG. 1A shows an example system 100 for adapting an interactive electronic form for use on a device that does not have a reader application supporting the format of the form. The system 100 includes a remote device 102, an adaptation system 104, and a form composition system 106.

A user may compose an interactive electronic form 108 at the form composition system 106. In certain implementations, the form 108 may be a graphical user interface. The form 108 may have a format that is supported by a particular reader application, such as the Adobe® Reader® application commercially available from Adobe Systems Incorporated of San Jose, California. In certain implementations, the form composition system 106 includes a form editor, such as the Adobe® LiveCycle® Designer editor, for creating the form 108. In other implementations, the composition of the form 108 is performed at the adaptation system 104.

The form 108 may include components, such as input components 110-112 and a submit button 114, that allow an end user to interact with the electronic form 108. For example, the form 108 may be a sales form that allows an end user to perform a price check on a particular product for a particular customer. The end user may input data, such as a customer identifier and a product identifier, using the input components 110-112.

The adaptation system 104 adapts the form 108 for use on the remote device 102. The adaptation system 104 includes an application generator 116. The application generator 116 may extract source code from the form 108 that defines one or more functions of the form 108. Alternatively, the source code can be extracted by other means, such as the form composition system 106. For example, the source code may be provided by the Adobe® LiveCycle® Designer application at the form composition system 106. The application generator 116 parses the source code to identify components of the form 108, such as the input components 110-112 and the submit button 114. The application generator 116 uses the identified form components to generate a form emulator application 118 that, when executed, provides one or more functions of the form 108. The adaptation system 104 forwards the form emulator application 118 to the remote device 102. In certain implementations, the forwarding is in response to a request from the remote device 102 for the form emulator application 118. Alternatively, the forwarding of the emulator application 118 may be in response to a request from the remote device 102 for the form 108.

In certain implementations, the remote device 102 is a wireless computing device, such as a cell phone or an e-mail reader. One example of an e-mail reader is the Blackberry device, commercially available from Research In Motion Limited of Waterloo, Canada. The remote device 102 may not have a reader application capable of presenting the form 108, but the remote device 102 can execute the form emulator application 118. In certain implementations, the form emulator application 118 is a Java MIDlet (Mobile Information Device applet) and the remote device 102 contains a Java Micro Edition virtual machine capable of executing the Java MIDlet. When executed, the form emulator application 118 provides an end user with a form 120. In certain implementations, the emulated form 120 is substantially similar to the interactive electronic form 108.

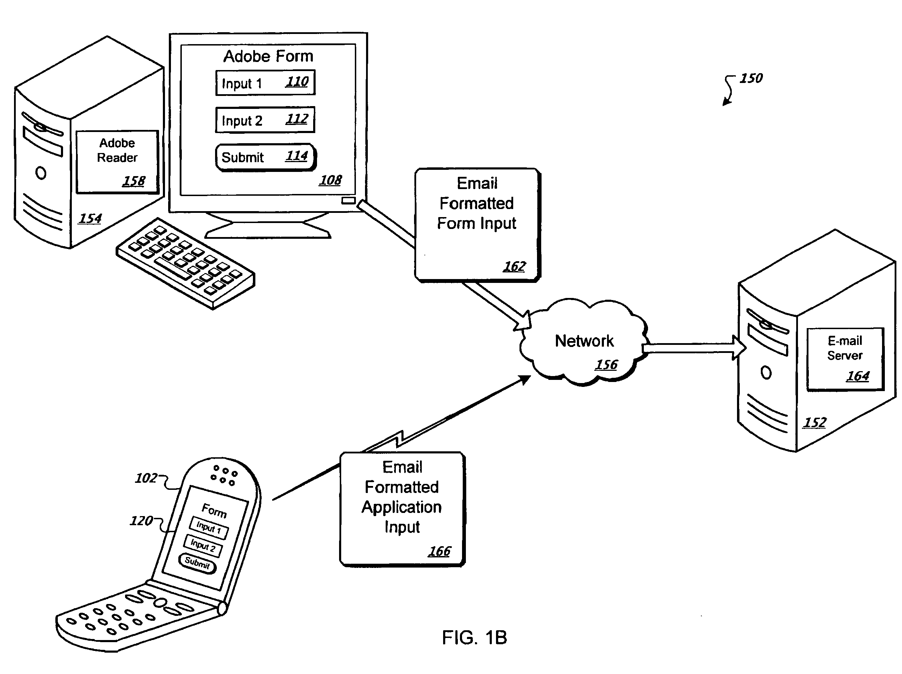

FIG. 1B shows an example system 150 for emulating transmission of interactive electronic form data using the remote device 102. The system 150 includes the remote device 102, an e-mail system 152, and a form end user system 154. The remote device 102, the e-mail system 152, and the form end user system 154 can communicate via a network 156.

The form end user system 154 includes a form reader application, such as an Adobe Reader application 158, capable of presenting the interactive electronic form 108, which may be a form such as an Adobe PDF (Portable Document Format) form. The form reader 158 formats data that is input by an end user into a second format for transmission to the network. In FIG. 1B, the input is formatted into an e-mail and sent as indicated by the transmission of an e-mail formatted form input 162. The form reader 158 transmits the e-mail formatted form input 162 to an e-mail server application 164, where the transmission can be initiated in response to the end user selecting the submit button 114. In certain implementations, the e-mail formatted form input 162 is contained within an e-mail message. In other implementations, the e-mail formatted form input 162 is contained within an e-mail attachment. Alternatively, the form input data and the server application may use other formatting and corresponding transmission protocols, such as SMS (Short Message Service) text messages or XML (Extensible Markup Language) files, to send and receive form input data.

In the case of the remote device 102, which does not include the reader application 158, a form emulator application is sent to the remote device 102. The form emulator application is generated using components of the form 108 as described with respect to FIG. 1A. The form emulator application formats data that is input through the user interface 120 into an e-mail formatted application input 166. The e-mail formatted application input 166 can be substantially similar to the e-mail formatted form input 162 (e.g., the application input 166 is formatted as an e-mail or e-mail attachment). The e-mail formatted application input 166 is transmitted to the e-mail server 164 via the network 156.

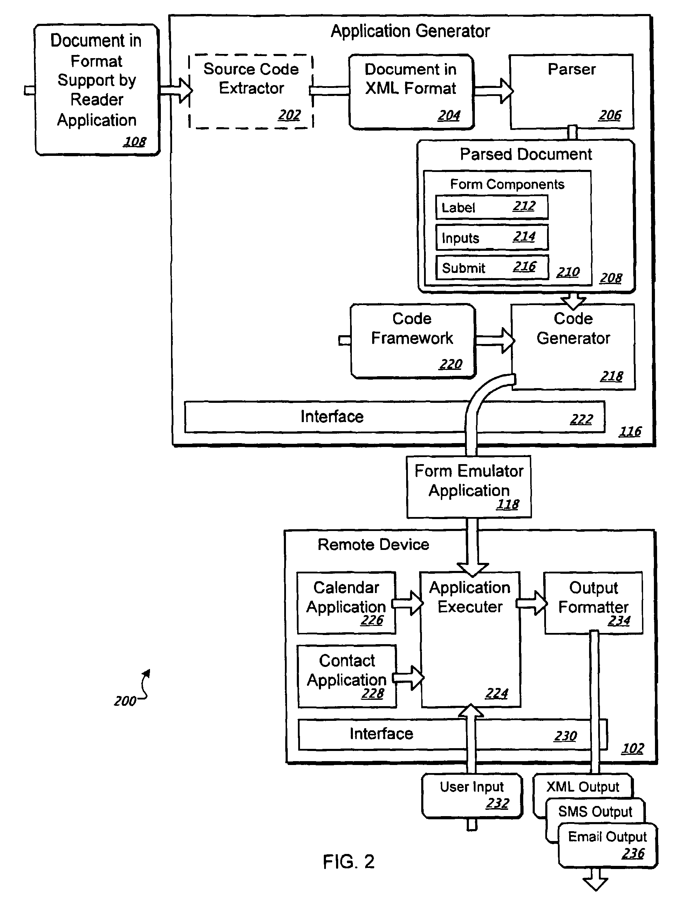

FIG. 2 is a block diagram of an example of modules 200 within the application generator 116 and the remote device 102. Particularly, the application generator 116 can contain a source code extractor 202 capable of extracting source code 204 from the interactive electronic form 108. In certain implementations, the source code 204 is in an XML format. The source code 204 defines one or more functions of the electronic form 108, such as input components. In certain implementations, the code extraction may be performed by a module other than the application generator 116, such as the form editor used to create the form 108. For example, after the form 108 is created or accessed, it can be saved in an XML format.

The application generator 116 includes a parser 206. The parser 206 parses the source code 204 to identify the components of the interactive electronic form 108. For example, the parser 206 may output a parsed form 208 containing identified components 210. The identified components 210 can include a variety of form elements, for example, a form label 212, form inputs 214, and a form submit button 216.

The application generator 116 also includes a code generator 218. The code generator 218 generates the form emulator application 118 using the parsed form 208 and the identified components 210. In certain implementations, the code generator 218 uses a code framework 220 in addition to the form components 210. The code framework 220 can contain a basic structure of the form emulator application 118 common to form emulation applications. For example, the code framework 220 can be a java class with defined methods and variables that are common to form emulator applications. The code framework 220 can provide functions, for example, access to a Personal Information Manager (PIM) database or Record Store within the remote device 102 containing contact information or other information that may be used by a form emulator application. For example, a Record Store may be an information storage device used by the remote device 102. In certain implementations, the PIM uses the Record Store to store contact information.

The form components 210 may indicate customizations to be made to the basic structure contained in the code framework 220. For example, if the code framework 220 is a java class, the class can be extended in a child class to include additional or customized methods and variables based on the particular form components 210. In certain implementations, the code framework 220 provides for the inclusion of more than one interactive electronic form in the form emulator application 118.

In certain implementations, one or more of the operations of the parser 206 and the code generator 218 are performed by plug-ins to an application, such as Eclipse Forms plug-ins available from the Eclipse Foundation, Inc. of Ottawa, Canada. In certain implementations, the operations for creating the form emulator application 118 may be performed by a wizard interface that guides a user through the steps of the process.

The application generator 116 transmits the form emulator application 118 to the remote device 102 via an interface 222. The remote device 102 includes an application executer 224 capable of executing the form emulator application 118, for example, a Java Micro Edition virtual machine. The form emulator application 118 may use functions provided by the code framework 220 or customized code to access a calendar application 226 and a contact application 228 within the remote device 102. For example, the calendar application 226 may provide a list of dates for selection to the form emulator application 118 and the contact application 228 may provide a list of contact names to the form emulator application 118.

The form emulator application 118 may present a user interface to an end user via an interface 230. The form emulator application 118 may also receive a user input 232 via the interface 230, such as an input in a form field or the selection of a submit button. An output formatter 234 generates a formatted response 236 to be sent when the form data is submitted. In certain implementations, the formatted response 236 may be an XML output, an SMS output, or an e-mail output. In certain implementations, the output formatter 234 is a component of the form emulator application 118, such as in the code framework 220 included in the form emulator application 118.

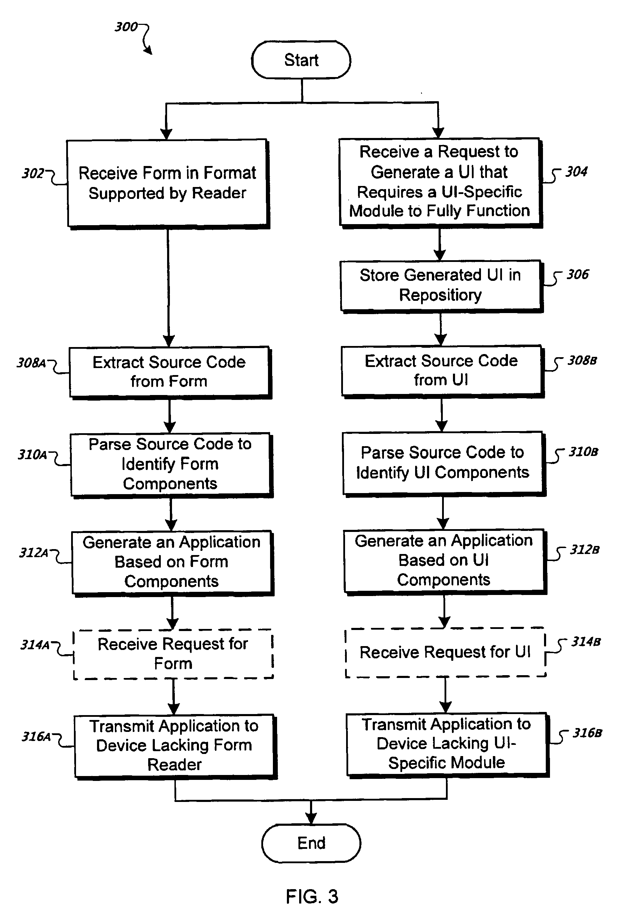

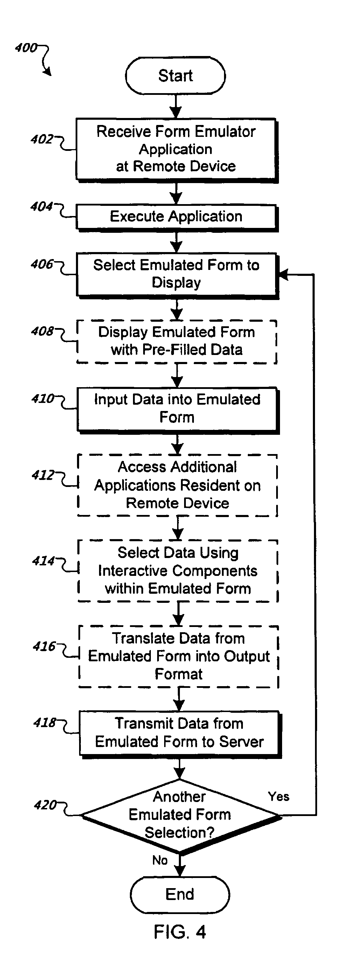

FIGS. 3 and 4 are flow charts of example processes 300 and 400, respectively. The processes 300 and 400 may be performed, for example, by systems such as the systems 100, 150, and 200. For clarity of presentation, the descriptions that follow use the systems 100, 150, and 200 as the basis of examples for describing the processes 300 and 400. However, another system, or combination of systems, may be used to perform the processes 300 and 400.

Referring to FIG. 3, the process 300 is an example process for adapting an interactive electronic form or other user interface for execution on a remote device. The process 300 may be performed using forms as described above. In certain implementations, the process 300 may be performed using other user interfaces, such as an HTML (HyperText Markup Language) web page or a document in a format other than the PDF format described above. The process 300 may begin with step 302 where a form in a format supported by a reader application is received. For example, the adaptation system 104 may receive the interactive electronic form 108 from the form composition system 106. Alternatively, the process 300 may begin at step 304 where a request to generate a user interface or a portion of a user interface that requires a user interface-specific module to be fully functional is received. For example, a user interface element may require a user interface framework to function, or a full user interface may require a backend application with which to interact. The generated user interface or user interface component is stored, at step 306, in a repository.

The path of flow beginning with step 302 represents a process for adapting an interactive electronic form for execution on a remote device, while the path of flow beginning with step 304 represents a process for adapting other types of user interfaces for execution on remote device. For example, some other user interfaces may operate in the context of a larger application that supports the user interfaces. The user interfaces may be created so that the remote devices can have access to the larger application. These two processes are similar in some respects and are shown side by side to highlight those similarities. In certain implementations, the adaptation of an interactive electronic form may be a particular example of the adaptation of a user interface.

Source code is extracted from the form or the user interface, at steps 308A and 308B, respectively. For example, the source code extractor 202 may extract the source code 204 from the form 108.

The source code is parsed to identify form components and user interface components at steps 310A and 310B, respectively. For example, the parser 206 parses the source code 204 to identify the form components 210.

An application is generated based on form components or user interface components at steps 312A and 312B, respectively. For example, the code generator 218 generates the form emulator application 118 using the identified form components 210 and the code framework 220.

Optionally, a request may be received for the form or the user interface at steps 314A and 314B, respectively. For example, the remote device 102 may request the form 108 from the system 104. Alternatively, the remote device may request the form emulator application 118.

The application is transmitted to the device lacking the form reader or the user interface-specific module at steps 316A and 316B, respectively. For example, the interface 222 transmits the form emulator application 118 to the remote device 102.

Referring to FIG. 4, the process 400 is an example of a process for emulating transmission of interactive form data using a mobile device. The process 400 begins with step 402 where a remote device receives a form emulator application. For example, the remote device 102 receives the form emulator application 118 from the adaptation system 104.

The remote device executes the form emulator application, at step 404. For example, the application executer 224 within the remote device 102 executes or interprets the form emulator application 118.

An emulated form is selected for display, at step 406. For example, the form emulator application 118 may include more than one interactive electronic form representation. The form emulator application 118 may provide a menu that allows an end user to select a form for display.

Optionally, the emulated form may be displayed with pre-filled data, at step 408. For example, a drop down list for a product identifier form field in a purchase order form may be pre-filled with a product identifier previously determined during a search operation. In certain implementations, form data is pre-filled prior to transmission to the remote device 102, such as in the previous product identifier example. In certain implementations, form data is pre-filled at the remote device 102, such as contact data retrieved from the PIM at the remote device 102 used to pre-fill a customer identifier form field. Data is entered into the emulated form, at step 410. For example, an end user may make an input using the input components 214, such as typing text into a text input field, selecting an item from a drop down list, or speaking an input using voice recognition.

Optionally, additional applications resident on the remote device may be accessed, at step 412. For example, the form emulator application 118 may access the calendar application 226 and the contact application 228.

Optionally, data may be selected using interactive components within the emulated form. For example, the emulated form may provide a calendar control to input a date selection and a contact list control to input a contact selection (e.g., an e-mail address associated with the contact selection may be used as a destination for the form data transmission).

Optionally, the data from the emulated form is translated into an output format, at step 416. For example, the form emulator application 118 or the output formatter 234 may format the form output as XML data, which can be attached to an e-mail.

The form data is transmitted to a server, at step 418. For example, upon selection of the submit button, the e-mail formatted application input 166 is sent to the e-mail server 164 via the network 156.

If, at step 420, another emulated form is selected, then the process 400 returns to step 406 where the selected emulated form is displayed. If another emulated form is not selected, then the process 400 terminates.

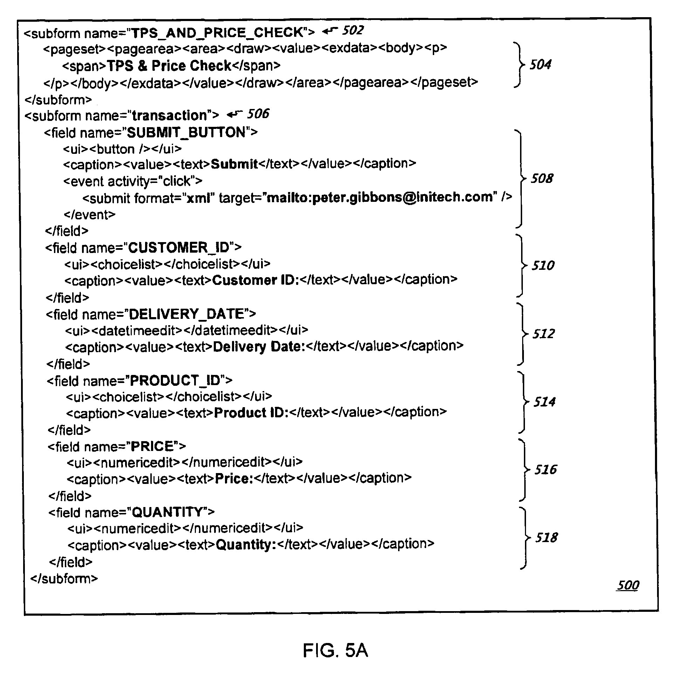

FIG. 5A is an example of source code 500 extracted from an interactive electronic form. The source code extractor 202, for example, may perform the extraction of the source code 500 from the interactive electronic form. In this example, the source code 500 is in an XML format. The source code 500 includes a TPS_AND_PRICE_CHECK identifier attribute 502 and a TPS & Price Check label 504 for the form that the source code 500 represents. A transaction subsection 506 within the source code 500 includes the components with which a user may make inputs and selections.

Specifically, the transaction subsection 506 includes a submit button control 508, a customer identifier selection control 510, a delivery date input control 512, a product identifier selection control 514, a price input control 516, and a quantity input control 518. In general, each control includes attributes, tags, and tag contents that describe a unique field identifier (e.g., name="CUSTOMER_ID"), a user interface label (e.g., <caption><value><text>Customer ID:</text></value></caption>), and an input control type (e.g., <ui><choicelist></choicelist></ui>). The button input type allows the user to submit the form. The choicelist input type provides a combination of text entry and list selection. The datetimeedit input type allows a user to select a date and time from a calendar control. The numericedit input type allows a user to input a numeric value. In addition, the submit button control 508 includes an e-mail address to which the form data is sent when the form is submitted as well as the format in which to send the form data.

In general, the source code 500 includes additional tags and attributes which describe layout and formatting of the form. For clarity of presentation, these tags and attributes are not shown in FIG. 5A. However, layout and formatting information, as well as other information contained in the form, may be used when generating the form emulator application 118.

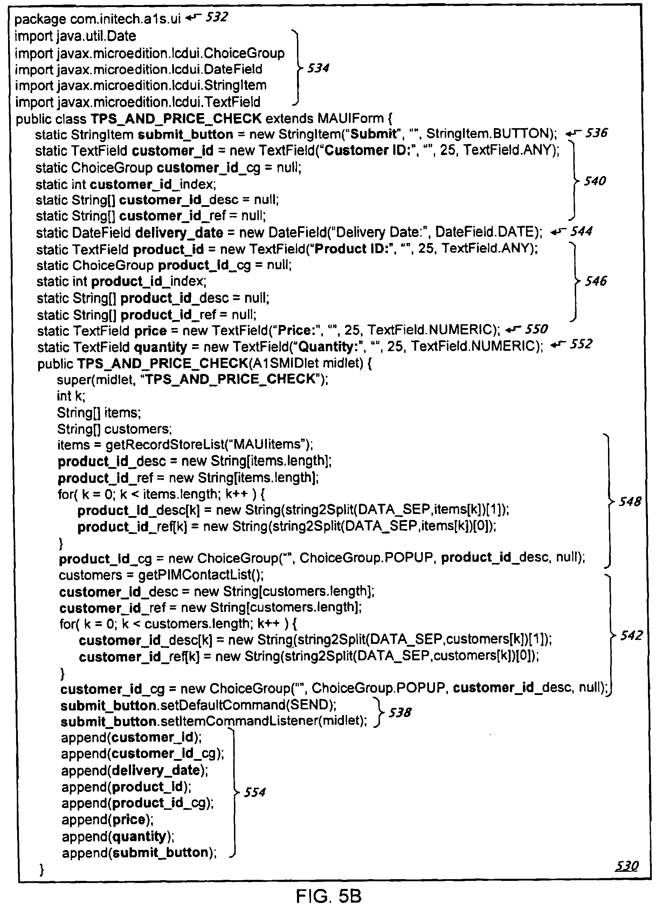

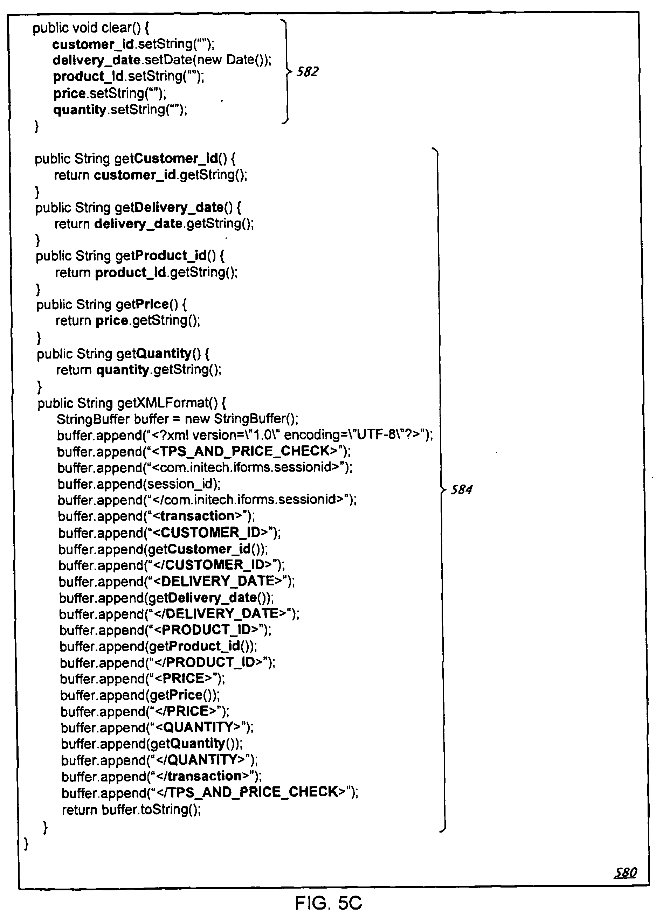

FIG. 5B is a first portion 530 of an example of code generated for a form emulator application. In this example, the generated code is a Java MIDlet and utilizes the Java Micro Edition virtual machine to provide the user interface 120 on the remote device 102. The generated code shown here and in FIG 5C is adapted from the source code 500 shown in FIG. 5A. The code generator 218, for example, may adapt the source code 500 to form the generated code, including the first portion 530.

The generated code includes a package 532 containing the code framework 220. The package 532 provides a MAUIForm class, an A1SMIDlet class, a getRecordStoreList() method, and a getPIMContactList() method that may be used in the generated code. The MAUIForm class is a generic MIDlet form class. Form emulator applications created from interactive electronic forms extend the MAUIForm class. The MAUIForm class defines behaviors and contains elements commonly used by form emulator applications. A form emulator application may contain representations of one or more interactive electronic forms. The A1SMIDlet class provides navigation through the multiple forms, such as by providing a menu where an end user may select a form to be presented. In FIG 5B only one form is shown, however the A1 SMID1et class may contain more than one form. The getRecordStoreList() and getPIMContactList() are methods that provide access to data stored in the Record Store or the PIM of a mobile device, respectively.

Java classes 534 used by the form emulator application are imported. In general, the classes 534 include Java Micro Edition classes for use on, for example, a mobile device. The classes 534 provide functionality such as a selection list input control, a date and time input control, a submit button control, and a text input control.

For example, the submit button control 508 is adapted as a submit_button StringItem 536. Code 538 associates the submit_button StringItem with a SEND command and a midlet. In general, boldface text indicates text adapted directly from the source code 500. Other adaptations may occur as well. For example, the <ui><button /></ui> tags in the source code 500 are adapted as a StringItem where the constructor is passed a StringItem.BUTTON option, as indicated by the code 536. The <ui><choicelist></choicelist></ui> tags of the customer identifier selection control 510 are adapted as a TextField together with a ChoiceGroup, as is the case with code 540. The TextField provides for text input functionality and the ChoiceGroup provides for list selection input functionality. Code 542 populates the customer identifier ChoiceGroup using the getPIMContactList() method.

Code 544 provides a DateField for the delivery date adapted from the delivery date input control 512. Code 546 provides a TextField and a ChoiceGroup for the product identifier adapted from the product identifier selection control 514. Code 548 populates the product identifier ChoiceGroup with data from the Record Store within the mobile device. Code 550 provides a TextField for the price adapted from the price input control 516. The code 550 restricts the input to numeric values as indicated in the source code 500 (i.e., <ui><numericedit></numericedit></ui>) by using a TextField.NUMERIC option in the TextField constructor. Similarly, code 552 provides a numeric TextField for the quantity adapted from the quantity input control 518.

Code 554 instructs the user interface to display the elements described above. For clarity of presentation, layout and formatting information are not shown in FIG. 5B. However, layout and formatting information, as well as other information, may be adapted from the source code 500 and used in the generated code.

FIG. 5C is a second portion 580 of an example of code generated for a form emulator application. Again, the code generator 218, for example, may adapt the source code 500 to form the generated code, including the second portion 580. The generated code includes code 582 to clear the contents of the form and code 584 to generate text output in XML format. The code 584 may be executed as a result of an end user selecting the submit button. The code 538 linking the submit button to the SEND command and the midlet calls the getXMLFormat() method. Instances of the MAUIForm class implement the getXMLFormat() method. In certain implementations, the e-mail address included in the source code 500 may be used as a destination for the XML form data output. Additionally, an end user may specify a destination e-mail address or select a destination e-mail address from a list retrieved from the PIM or Record Store within the mobile device. In certain implementations, the XML output from the form emulator application is substantially similar to the output from the corresponding interactive electronic form. In certain implementations, the form emulator application pre-fills data in the form, such as by putting the current date in the delivery date field.

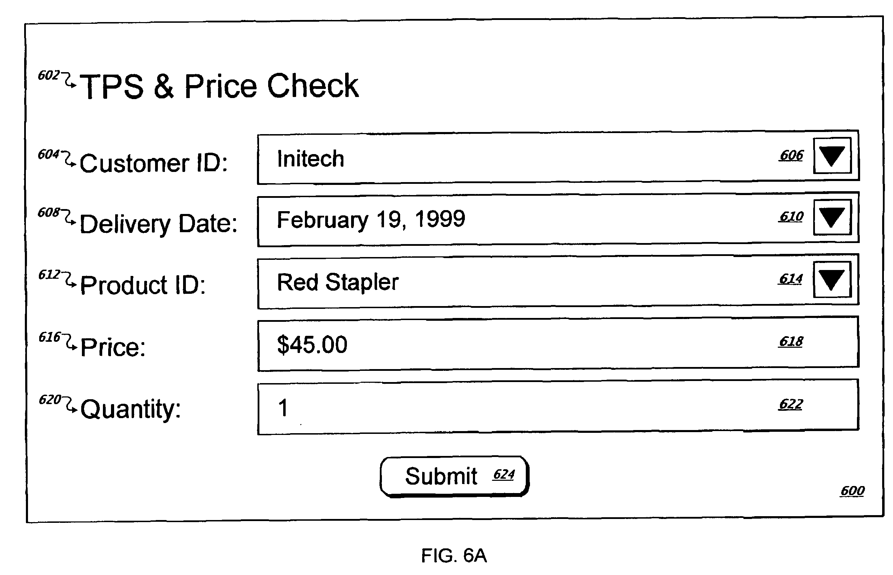

FIG. 6A is an example of a graphical user interface 600 of an interactive electronic form. The GUI 600 includes a TPS & Price Check title 602 that corresponds to the label 504 in the source code 500. The GUI 600 also includes a Customer ID label 604 and combination input/selection field 606 that correspond to the code 510, a Delivery Date label 608 and input field 610 that correspond to the code 512, a Product ID label 612 and combination input/selection field 614 that correspond to the code 514, a Price label 616 and input field 618 that correspond to the code 516, a Quantity label 620 and input field 622 that correspond to the code 518, and a Submit button 624 that corresponds to the code 508.

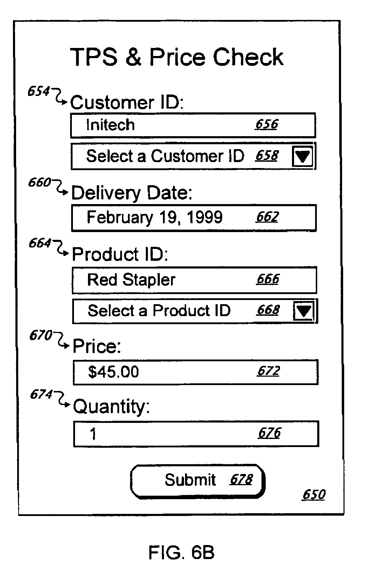

FIG. 6B is an example of a graphical user interface 650 of a form emulator application. The GUI 650 includes a Customer ID label 654, input field 656, and list selection field 658 defined by the code 540 and 542; a Delivery Date label 660 and date input/selection field 662 defined by the code 544; a Product ID label 664, input field 666, and list selection field 668 defined by the code 546 and 548; a Price label 670 and input field 672 defined by the code 550; a Quantity label 674 and input field 676 defined by the code 552; and a Submit button 678 defined by the code 536 and 538.

In certain implementations, the layout used by the form emulator application may be determined by the layout used by the interactive electronic form. In certain implementations, the form layout may be adapted to the display capabilities of the display device used by the mobile device. For example, the GUI 600 is arranged in a landscape orientation. The adaptation of the interactive electronic form may, for example, place labels above input fields to achieve a more vertical orientation. This may allow more of the form to be presented on the vertical oriented display device of a mobile device than if the form were presented in a landscape orientation. In certain implementations, the form emulator application or module of the mobile device may provide scrolling capability to view portions of a form not currently presented.

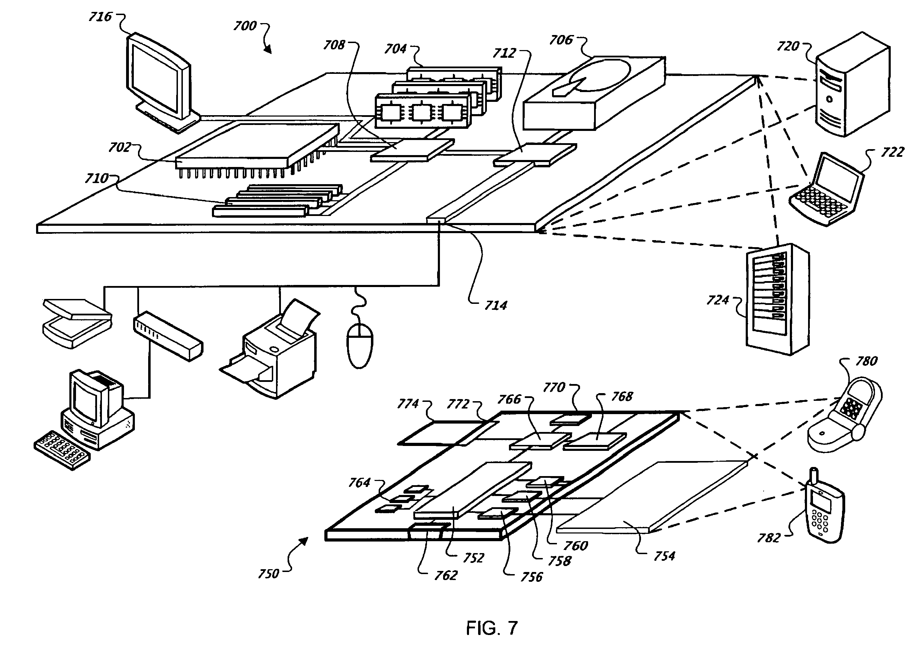

FIG. 7 is a block diagram of computing devices 700, 750 that may be used to implement the systems and methods described in this document, as either a client or as a server or plurality of servers. Computing device 700 is intended to represent various forms of digital computers, such as laptops, desktops, workstations, personal digital assistants, servers, blade servers, mainframes, and other appropriate computers. Computing device 750 is intended to represent various forms of mobile devices, such as personal digital assistants, cellular telephones, smartphones, and other similar computing devices. The components shown here, their connections and relationships, and their functions, are meant to be exemplary only, and are not meant to limit implementations of the inventions described and/or claimed in this document.

Computing device 700 includes a processor 702, memory 704, a storage device 706, a high-speed interface 708 connecting to memory 704 and high-speed expansion ports 710, and a low speed interface 712 connecting to low speed bus 714 and storage device 706. Each of the components 702, 704, 706, 708, 710, and 712, are interconnected using various busses, and may be mounted on a common motherboard or in other manners as appropriate. The processor 702 can process instructions for execution within the computing device 700, including instructions stored in the memory 704 or on the storage device 706 to display graphical information for a GUI on an external input/output device, such as display 716 coupled to high speed interface 708. In other implementations, multiple processors and/or multiple buses may be used, as appropriate, along with multiple memories and types of memory. Also, multiple computing devices 700 may be connected, with each device providing portions of the necessary operations (e.g., as a server bank, a group of blade servers, or a multi-processor system).

The memory 704 stores information within the computing device 700. In one implementation, the memory 704 is a computer-readable medium. In one implementation, the memory 704 is a volatile memory unit or units. In another implementation, the memory 704 is a non-volatile memory unit or units.

The storage device 706 is capable of providing mass storage for the computing device 700. In one implementation, the storage device 706 is a computer-readable medium. In various different implementations, the storage device 706 may be a floppy disk device, a hard disk device, an optical disk device, or a tape device, a flash memory or other similar solid state memory device, or an array of devices, including devices in a storage area network or other configurations. In one implementation, a computer program product is tangibly embodied in an information carrier. The computer program product contains instructions that, when executed, perform one or more methods, such as those described above. The information carrier is a computer- or machine-readable medium, such as the memory 704, the storage device 706, memory on processor 702, or a propagated signal.

The high speed controller 708 manages bandwidth-intensive operations for the computing device 700, while the low speed controller 712 manages lower bandwidth-intensive operations. Such allocation of duties is exemplary only. In one implementation, the high-speed controller 708 is coupled to memory 704, display 716 (e.g., through a graphics processor or accelerator), and to high-speed expansion ports 710, which may accept various expansion cards (not shown). In the implementation, low-speed controller 712 is coupled to storage device 706 and low-speed expansion port 714. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 700 may be implemented in a number of different forms, as shown in the figure. For example, it may be implemented as a standard server 720, or multiple times in a group of such servers. It may also be implemented as part of a rack server system 724. In addition, it may be implemented in a personal computer such as a laptop computer 722. Alternatively, components from computing device 700 may be combined with other components in a mobile device (not shown), such as device 750. Each of such devices may contain one or more of computing device 700, 750, and an entire system may be made up of multiple computing devices 700, 750 communicating with each other.

Computing device 750 includes a processor 752, memory 764, an input/output device such as a display 754, a communication interface 766, and a transceiver 768, among other components. The device 750 may also be provided with a storage device, such as a microdrive or other device, to provide additional storage. Each of the components 750, 752, 764, 754, 766, and 768, are interconnected using various buses, and several of the components may be mounted on a common motherboard or in other manners as appropriate.

The processor 752 can process instructions for execution within the computing device 750, including instructions stored in the memory 764. The processor may also include separate analog and digital processors. The processor may provide, for example, for coordination of the other components of the device 750, such as control of user interfaces, applications run by device 750, and wireless communication by device 750.

Processor 752 may communicate with a user through control interface 758 and display interface 756 coupled to a display 754. The display 754 may be, for example, a TFT LCD display or an OLED display, or other appropriate display technology. The display interface 756 may comprise appropriate circuitry for driving the display 754 to present graphical and other information to a user. The control interface 758 may receive commands from a user and convert them for submission to the processor 752. In addition, an external interface 762 may be provide in communication with processor 752, so as to enable near area communication of device 750 with other devices. External interface 762 may provide, for example, for wired communication (e.g., via a docking procedure) or for wireless communication (e.g., via Bluetooth or other such technologies).

The memory 764 stores information within the computing device 750. In one implementation, the memory 764 is a computer-readable medium. In one implementation, the memory 764 is a volatile memory unit or units. In another implementation, the memory 764 is a non-volatile memory unit or units. Expansion memory 774 may also be provided and connected to device 750 through expansion interface 772, which may include, for example, a SIMM card interface. Such expansion memory 774 may provide extra storage space for device 750, or may also store applications or other information for device 750. Specifically, expansion memory 774 may include instructions to carry out or supplement the processes described above, and may include secure information also. Thus, for example, expansion memory 774 may be provide as a security module for device 750, and may be programmed with instructions that permit secure use of device 750. In addition, secure applications may be provided via the SIMM cards, along with additional information, such as placing identifying information on the SIMM card in a non-hackable manner.

The memory may include for example, flash memory and/or MRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 764, expansion memory 774, memory on processor 752, or a propagated signal.

Device 750 may communicate wirelessly through communication interface 766, which may include digital signal processing circuitry where necessary. Communication interface 766 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 768. In addition, short-range communication may occur, such as using a Bluetooth, WiFi, or other such transceiver (not shown). In addition, GPS receiver module 770 may provide additional wireless data to device 750, which may be used as appropriate by applications running on device 750.

Device 750 may also communication audibly using audio codec 760, which may receive spoken information from a user and convert it to usable digital information. Audio codex 760 may likewise generate audible sound for a user, such as through a speaker, e.g., in a handset of device 750. Such sound may include sound from voice telephone calls, may include recorded sound (e.g., voice messages, music files, etc.) and may also include sound generated by applications operating on device 750.

The computing device 750 may be implemented in a number of different forms, as shown in the figure. For example, it may be implemented as a cellular telephone 780. It may also be implemented as part of a smartphone 782, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

A number of embodiments of the invention have been described. Nevertheless, it will be understood that various modifications may be made without departing from the spirit and scope of the invention. For example, additional forms may be transmitted to the form emulator application instead of having to send a new application if additional forms are created. The new forms can be integrated into or accessible to the existing application on the remote device. Additionally, various forms of the flows shown above may be used, with steps re-ordered, added, or removed. Also, although several applications of the systems and methods have been described, it should be recognized that numerous other applications are contemplated. Accordingly, other embodiments are within the scope of the following claims.

## Claims

1. A method of adapting an interactive electronic form, the method comprising:
extracting, from an interactive electronic form, source code that defines at least one function of the interactive electronic form, the interactive electronic form having a format that is supported by a reader application;
parsing the source code to identify components of the interactive electronic form;
generating an executable application using the identified components that when executed provides the at least one function of the interactive electronic form; and
forwarding the executable application for execution on a device that does not have the reader application.

2. The method of claim 1, wherein the format supported by the reader application comprises Adobe® Portable Document Format.

3. The method of one of the preceding claims, wherein generating the executable application further comprises accessing a code framework that is customized based on the identified components of the interactive electronic form.

4. The method of claim 3, wherein the code framework comprises code to facilitate e-mail transmission of user input entered into the executable application.

5. The method of one of the preceding claims, further comprising receiving from the device a request for the executable application or the interactive electronic form.

6. The method of one of the preceding claims, wherein the device is a cell phone or an e-mail reader.

7. The method of one of the preceding claims, further comprising receiving the interactive electronic form in Adobe® Portable Document Format.

8. The method of one of the preceding claims, wherein the interactive electronic form is a graphical user interface.

9. A method for emulating transmission of interactive electronic form data using a mobile device, the method comprising:
receiving at a mobile device an emulator application generated using identified components of an interactive electronic form, the interactive electronic form displayable by a form reader application configured to format data that is input into the interactive electronic form and transmit the formatted data to a server application;
executing the emulator application, the execution comprising formatting data input into the emulator application in a format substantially similar to a format of the formatted data generated by the form reader application; and
transmitting the data formatted by the emulator application to the server application.

10. The method of claim 9, further comprising validating the data input into the emulator application based on validation requirements specified by at least one of the identified components of the interactive electronic form.

11. The method of claim 9 or 10, the execution further comprising receiving information from a local application stored at the mobile device.

12. The method of claim 11, wherein the received information includes contact information or calendar information.

13. The method of one of the preceding claims 9 to 12, wherein formatting the data input into the emulator application comprises formatting the data as extensible markup language.

14. The method of one of the preceding claims 9 to 13, wherein formatting the data input into the emulator application comprises formatting the data as an e-mail or an e-mail attachment.

15. The method of one of the preceding claims 9 to 14, wherein formatting the data input into the emulator application comprises formatting the data as a short messaging service (SMS) message.

16. The method of one of the preceding claims 9 to 15, wherein the mobile device uses a local java interpreter to execute the emulator application.

17. A system for adapting an interactive electronic form, the system comprising:
an extractor to extract source code that defines at least one function of an interactive electronic form, the interactive electronic form having a format that is supported by a reader application;
a parser to identify components of the interactive electronic form;
a code generator for generating an executable application using the identified components that when executed provides the at least one function of the interactive electronic form; and
an interface for transmitting the executable application to a remote device that lacks the reader application.

18. The system of claim 17, wherein the executable application is a java program.

19. The system of claim 17 or 18, wherein the parser, the code generator, and the interface are part of a plug-in of executable code that is accessed by a stand-alone application.

20. A computer program product tangibly embodied in an information carrier, the computer program product including instructions that, when executed, perform operations comprising:
extracting, from an interactive electronic form, form definitions that specify at least one interaction performed by the form, the form having a format that is used by a reader application;
identifying components of the form definitions;
generating an executable application using the identified components that when executed performs the at least one interaction;
transmitting the executable application for execution on a device that does not have the reader application.
